# EUROPÄISCHE PATENTANMELDUNG

(11) **EP 0 806 152 A2**
(43) Veröffentlichungstag der Anmeldung: **12.11.1997**
(21) Anmeldenummer: 97107530.4
(22) Anmeldetag: 07.05.1997
(51) Int. Cl.: A23G 7/00, A23G 7/02, A23G 1/26

(54) **Einlagerungsverfahren sowie anordnung zur vorübergehenden Lagerung von gefüllten, aus einer Schololadeneintafelanlage kommenden Formen**

(30) Priorität: 09.05.1996 IT MI960933
(71) Anmelder: CARLE & MONTANARI S.p.A., 20141 Milano (IT)
(72) Erfinder: Bertini, Angelo, 20017 Rho (MI) (IT); Manzon, Daniele, Cusano Milanino (IT)
(74) Vertreter: Mayer, Hans Benno, Dipl.-Ing.

(57) **Zusammenfassung**

Für ein Verfahren und eine Anordnung zur vorübergehenden Lagerung von gefüllten, aus einer Schokoladeneintafelanlage kommenden Formen ist vor dem Ausformungsbereich ein Raum vorgesehen, der Ein- sowie Austrittsöffnungen für die mit Schokolade gefüllten Formen, die in üblicher Weise von Kettenpaaren gefördert werden, aufweist. Die Kettenpaare durchqueren mäanderartig und zusammen mit den Formen den Raum, wobei im Breich einer die Eintrittsöffnung bzw. die Austrittsöffnung für die Kettenpaare aufweisenden Begrenzungswand übereinanderangeordnete Umlenkräder in ortsfester Lage angeordnet sind, und im Bereich der entgegengesetzten, den Raum begrenzenden und eine Öffnung zum Ein- bzw. zum Austritt der Kettenpaare aufweisenden Wand weitere übereinanderangeordnete Umlenkräder in ortsfester Lage angeordnet sind, und zwischen den Gruppen der in ortsfester Lage angeordneten Umlenkräder ein oder mehrere frei beweglich gelagerte Schlitten vorgesehen sind, und jeder bewegliche Schlitten eine Gruppe Umlenkräder, über die das eintretende Kettentrumm geführt ist, sowie eine Gruppe Umlenkräder, über die die austretenden Kettentrumme geführt sind, trägt und im Bereich der ortsfesten, für das aus dem beweglichen Schlitten austretende Kettentrumm vorgesehenen Umlenkräder ein steuerbarer Motor in ortsfester Lage vorgesehen ist und im Bereich der ortsfesten und für das zum beweglichen Schlitten zurückkehrende Kettentrum vorgesehenen Umlenkräder ein weiterer steuerbarer Motor in ortsfester Lage vorsehbar ist.

## Beschreibung

Die Erfindung betrifft ein Verfahren sowie eine Anordnung zur vorübergehenden Lagerung von gefüllten, aus einer Schokoladeneintafelanlage kommenden Formen.

Bei modernen Schokoladeneintafelanlagen treten bekanntlich zwischen der im Dauerbetrieb arbeitenden Schokoladeneintafelvorrichtung und den Verpackungsmaschinen des fertigen Produktes gelegentlich Störungen auf.

Während die Schokoladeneintafelvorrichtung für eine zeitlich konstante Arbeitsweise, d.h. für Dauerbetrieb bei konstanter Geschwindigkeit, ausgelegt ist, sind bei den Maschinen zum Verpacken (Einschlagen) der Ware gelegentliche, auch nur wenige Minuten dauernde Unterbrechungen unvermeidbar und auch betriebsbedingt. Dies um übliche Wartungsarbeiten an der Verpackungsmaschine vorzunehmen, um Papierrollen auszuwechseln, die Papierzuführung registergenau einzuregeln und weitere, für eine einwandfreie Funktion der Verpackungsmaschinen erforderliche Arbeiten durchzuführen.

Bei den mit hohen Geschwindigkeiten arbeitenden Verpackungsmaschinen können ab und zu auch längere Stillstandszeiten eintreten und während dieser Betriebsunterbrechung sind die entsprechenden Maschinen für den Verpackungsvorgang nicht verwendbar.

Um gelegentliche Stillstandszeiten der Verpackungsmaschinen auszugleichen, wird in der Regel die Verpackungsanlage mit einem gewissen Spielraum ausgelegt, in der Art, dass ihre Leistungsfähigkeit stets höher ist als die aus der Eintafelvorrichtung austretende Produktmenge; dies um über eine tatsächliche Höchstverpackungsleistung zu verfügen, die wenigstens 120 % der maximalen Produktion der Eintafelanlage entspricht.

So sind im Bereich der Eintafelanlage z.B. drei Verpackungsmaschinen vorgesehen, denen die Schokoladenerzeugnisse zugeführt werden.

Die Vorsehung mehrerer Verpackungsmaschinen in einer Eintafelanlage bedingt einen erheblichen Kapitaleinsatz und diese Vorsehung mehrerer Verpackungsmaschinen bringt noch keine Gewähr für einen ungestörten Verpackungsablauf der Erzeugnisse, vor allem für die Durchführung eines sorgfältigen Verpackungsvorganges für alle von der Eintafelanlage kommenden Schokoladentafeln.

Es wurde früher bereits versucht, die vorher beschriebenen Nachteile dadurch zu beseitigen, dass die ausgeformten und noch nicht verpackten Erzeugnisse am Ende der Fertigungsstrasse gesammelt wurden, um diese Ware, die man aufgrund einer Betriebsstörung oder einer Unterbrechung der Verpackungsmaschinen nicht sofort ordnungsgemäss verpacken konnte, erneut für einen Eintafelvorgang zu verwenden.

Die angesammelte, unverpackte Ware wurde deshalb eingeschmolzen und in den Fertigungsablauf erneut zurückgeführt.

Ein weiterer Vorschlag für eine vorübergehende Lagerung der aus der Eintafelvorrichtung kommenden und von den Verpackungsmaschinen nicht verarbeitbaren Ware sah den Einsatz von Platten oder Tabletts vor, auf denen die Schokoladenerzeugnisse zwischengelagert wurden, da sie nicht sofort nach dem Austafeln verpackt werden konnten.

Diese Platten oder Tabletts wurden zusammen mit dem Schokoladenerzeugnis in entsprechenden Hordenwagen gelagert und die Schokoladenerzeugnisse wurden später in den Verpackungsvorgang zurückgeführt, sobald dies wieder möglich wurde, zum Beispiel am Ende einer Arbeitsschicht oder nach einer kurzen Unterbrechung der Formgebungsanlage.

Auch diese Lösung erscheint nicht zufriedenstellend, einmal, weil es nicht möglich ist, dieses Verfahren zur vorübergehenden Lagerung der Platten oder Tabletts zu automatisieren und zum anderen, weil eine Zwischenlagerung von Schokoladenerzeugnissen auf Platten oder Tabletts aus hygienischen Gründen nicht ratsam ist.

Es wurde auch vorgeschlagen, die Arbeitsgeschwindigkeit sowohl der Eintafelanlage als auch der Verpackungsmaschinen so zu steuern, dass beide Produktionseinheiten hinsichtlich der Menge der zugeführten Schokoladentafeln als auch hinsichtlich der Menge der zu verpackenden Tafeln auf demselben Leistungsniveau gehalten werden.

Die Notwendigkeit einer Verminderung der Produktivität der Eintafelanlage führt zu einer Verminderung des Wirkungsgrades der gesamten Anlage, und die dadurch entstehende Verminderung der Transportgeschwindigkeit ist in technologischer Hinsicht ungünstig. Grosse technische Probleme entstehen dann, wenn die Produktionsgeschwindigkeit der Eintafeleinrichtung und der gesamten Eintafelanlage, sowie diese ergänzenden Bereiche verändert werden sollen. Diese Maschinen und Anlagen arbeiten um so besser, je gleichbleibender ihre Arbeitsgeschwindigkeit ist.

Die erste beschriebene Lösung einer vorübergehenden Lagerung der Schokolandenprodukte lässt sich am wirtschaftlichsten und am einfachsten ausführen, sie führt jedoch zu einem wesentlich höheren Energiebedarf und zu einer verminderten Leistungsfähigkeit der gesamten Eintafelanlage.

Diese Lösung ist daher als nicht optimal anzusehen, vor allem in Anbetracht der Tatsache, dass gewisse Schokoladenerzeugnisse feste Körper, wie etwa Haselnüsse, Kekse oder Waffein, enthalten. In diesen Fällen ist das Einschmelzen und Wiederverwerten des Schokoladenmaterials sehr aufwendig und in manchen Fällen sogar unmöglich, zum Beispiel dann, wenn es sich um Pralinen handelt, die eine Füllung aus Flüssigkeit, Fondant oder Karamel oder eine wässerige Masse enthalten. Diese Zutaten sind mit der Rezeptur der erneut zu verwendeten Schokoladenmasse unverträglich.

Die zweite vorher erwähnte Lösung stellt eine Zwischenlösung dar, die erhebliche Handhabungsprobleme hat und die Notwendigkeit mit sich bringt, mehr Arbeitskräfte einzusetzen, die den Personalbedarf für einen geregelten Betrieb der Eintafelanlage sowie der Verpackungsmaschinen wesentlich übersteigt.

Die dritte beschriebene und bekannte Lösung lässt sich dem Anschein nach am besten und am einfachsten durchführen. Dem Fachmann auf dem Gebiet der Schokoladenherstellung ist es jedoch wohlbekannt, dass gute Arbeitsergebnisse einer modernen Eintafelanlage das Resultat einer feinen Abstimmung zur Erzielung eines Gleichgewichtszustandes ist.

Dieses Resultat ist insbesondere abhängig von gleichbleibenden Temperaturwerten, die mit genauen Behandlungszeiten der Schokolade in bestimmten Bereichen, wie etwa den Heizeinrichtungen der Formen oder den Kühleinrichtungen der Erzeugnisse selbst, in engem Zusammenhang stehen.

Solche Arbeitsbedingungen können aber nur allmählich verändert und beeinflusst werden, denn plötzliche Veränderungen, wie jene, die z.B. bei einer vorübergehenden Lagerung der Ware eintreten, würden das für den Eintafelvorgang erforderliche Gleichgewicht stören und zu einer zu grossen Ausschussproduktion und daher zu einer Herabsetzung des Wirkungsgrades der ganzen Anlage führen.

Eine weitere, zum vorbekannten Stand der Technik gehörende Lösung betrifft eine automatisch arbeitende Anlage, die aus zwei, über Schnittstellen miteinander verbundenen Transporteinrichtungen besteht. Diese Transporteinrichtungen erlauben eine etwa 30 Minuten andauernde, vorübergehende Lagerung der Ware.

Bisher stellte diese Anlage die wohl beste Lösung dar, da diese Eintafelanlage über Schnittstellen automatisch und daher ohne Bedarf an Arbeitskräften mit der oder den Verpackungsmaschinen kombinierbar ist. Dabei bleiben die Arbeitsparameter der beteiligten Einrichtungen unverändert synchron.

Sämtliche bisher vorgeschlagenen Lösungen für eine vorübergehende Lagerung von Schokoladenerzeugnissen weisen aber Nachteile auf, wie etwa die Notwendigkeit eines aufwendigen Steuersystems, das neben den herkömmlichen Eintafel- und Verpackungseinrichtungen zusätzliche Maschinen und Hilfsgeräte erfordert.

Es ist unbedingt notwendig, Schnittstellen sowie Steuereinrichtungen und Synchronisiervorrichtungen, sei es am Ein- als auch am Ausgang der Fertigungsstrasse vorzusehen. Unbedingt notwendig sind ausserdem voll klimatisierte Räume, während die Räume, in denen die Schokoladenherstellung erfolgt, normalerweise nicht klimatisiert sind. Schliesslich ist es auch erforderlich, die ausgeformte und noch nicht eingehüllte empfindliche Ware zu handhaben, wobei die bereits ausgeformte Ware der Gefahr einer Verunreinigung oder einer Beschädigung ausgesetzt ist.

Der Erfindung liegt die Aufgabe zugrunde, die zum aufgeführten Stand der Technik gehörenden Nachteile zu vermeiden und zwischen der Einrichtung für die Endkühlung des Schokoladenerzeugnisses und der Ausformeinrichtung eine neue Einrichtung zur vorübergehenden Lagerung oder Speicherung der ausgeformten Ware vorzuschlagen, wobei während der vorgeschlagenen und vorübergehenden Lagerung das Schokoladenerzeugnis in vorteilhafter Weise in der Form verbleibt und sich dabei in einem vollständig abgekapselten und geschützten Raum befindet, in dem das Produkt vor Verunreinigungen geschützt ist.

Erfindungsgemäss wird die Aufgabe durch ein Verfahren zur vorübergehenden Lagerung der aus einer Schokoladeneintafelanlage kommenden Formen dadurch gelöst, dass die das Schokoladenerzeugnis enthaltenden Formen einem Raum zugeführt werden, durch den die Formen entlang mäanderartig verlaufender Bahnen bewegt werden und dass die Länge der sich mäanderartig erstreckenden Bahnen je nach Anzahl der vorübergehend zu lagernden Formen veränderbar ist.

Das erfindungsgemässe Verfahren ist mittels einer Einrichtung durchführbar, die vorschlägt, dass vor dem Ausformbereich ein im wesentlichen geschlossener Raum vorgesehen ist, der Einlauf- sowie Austrittsöffnungen für Förderkettenpaare aufweist, zwischen denen die Formen in bekannter Weise aufgenommen werden, dass die Kettenpaare zusammen mit den Formen den Raum mäanderartig durchlaufen und im Bereich der die Eintrittsöffnung bzw. die Austrittsöffnung für das Kettenpaar aufweisenden Begrenzungswand übereinander angeordnete Umlenkräder in ortsfester Lage angeordnet sind, und im Bereich einer gegenüberliegenden, den Raum begrenzenden und eine Öffnung für den Eintritt bzw. den Austritt der Kettenpaare aufweisenden Wand ebenfalls übereinanderangeordnete Umlenkräder in ortsfester Lage vorgesehen sind, dass zwischen den Gruppen von ortsfest angeordneten Umlenkrädern ein in waagerechten Führungen frei beweglicher Schlitten vorgesehen ist und der bewegliche Schlitten eine Gruppe von Umlenkrädern, über die das eintretende Kettentrumm geführt ist, sowie eine Gruppe von Umlenkrädern, über die die austretenden Kettentrumme geführt sind, trägt, dass im Bereich der ortsfesten, für das aus dem beweglichen Schlitten austretende Kettentrumm vorgesehenen Umlenkräder ein steuerbarer Kettenantriebsmotor in ortsfester Lage vorgesehen ist und dass im Bereich der ortsfesten, für das zum beweglichen Schlitten zurückkehrende Kettentrumm vorgesehenen Umlenkräder, ein weiterer steuerbarer Kettenantriebsmotor in ortsfester Lage vorgesehen ist.

Mit einer, diese Merkmale aufweisenden Einrichtung zur vorübergehenden Lagerung von Schokoladenerzeugnissen wird eine Wartestrecke für die, einer Austafeleinrichtung zuzuführenden Formen sowie eine Strecke für den Rücklauf der leeren Formen geschaffen, wobei nach der Erfindung die Länge dieser Strecken veränderbar ist.

Beide Transportstrecken bestehen je aus einem Paar parallel zueinander angeordneter Ketten, welche die Formen in herkömmlicher Weise aufnehmen. Aufgrund der Vorsehung von wenigstens einem beweglichen Schlitten, der Umlenkrädergruppen für die Förderketten aufnimmt und dank der Vorsehung von steuerbaren Motoren, die sowohl hinsichtlich ihres Drehmoments als auch hinsichtlich ihrer Drehzahl unabhängig voneinander steuerbar sind, ist es möglich, die Bewegung des Schlittens so zu steuern, dass die von den einlaufenden Ketten gebildete und von den mit Schokolade gefüllten Formen zurückzulegende mäanderartig verlaufende Strecke auf ein Mindestmass gekürzt wird, damit für die gefüllten Formen ein fast direkter Weg zur Ausformeinrichtung entsteht.

Wird dagegen - wie es nachfolgend noch näher beschrieben werden wird - der mit Umlenkrädern ausgerüstete Schlitten zur Mitte des Lagerraumes hin bewegt, so kann die von den gefüllten Formen zu durchlaufende Strecke verlängert werden, womit auch die dazu erforderliche Durchlaufzeit zunimmt. Daraus folgt, dass während der Schlittenbewegung der Ausformeinrichtung (pro Zeiteinheit) weniger gefüllte Formen zugeführt werden.

Schliesslich ist es möglich, den Schlitten fast vollständig in Richtung auf die entgegengesetzte Wand des Raumes stufenweise zu verfahren, so dass die von den Ketten und daher von den gefüllten Formen zu durchlaufende mäanderartig angelegte Strecke bis zu einem vorgegebenen Mass allmählich verlängert wird und sich die vollen Formen nach und nach im Lagerungsraum ansammeln, mit dem Vorteil, dass die Anzahl der zur Ausformeinrichtung geführten Formen abnimmt, um dadurch eine beschränkte Aufnahmeleistung der Verpackungseinrichtung auszugleichen.

Anhand der beigefügten Zeichnungen wird nun anhand eines bevorzugten Ausführungsbeispieles der Gegenstand der Erfindung näher beschrieben und erläutert.

Es zeigen:
Figur 1 eine schematische Darstellung des vor einer Ausformeinrichtung angeordneten Lagerraumes, in welchem die beweglichen Schlitten so angeordnet sind, dass für die gefüllten Formen eine kürzestmögliche Durchlaufstrecke bis zur Ausformeinrichtung entsteht, mit einem minimalen Lagerraum für die gefüllten Formen;
Figur 2 den Lagerraum mit sich in Mittelstellung befindlichen verfahrbaren Schlitten, wobei für den Durchlauf der gefüllten Formen eine Strecke mittlerer Länge gebildet wird;
Figur 3 eine schematische Darstellung des Lagerraumes, in dem die verschiebbaren Schlitten so angeordnet sind, dass für die zu fördernden, gefüllten Formen eine Durchlaufstrecke grösserer Länge entsteht und einen Lagerraum der ganz mit gefüllten Formen belegt ist.

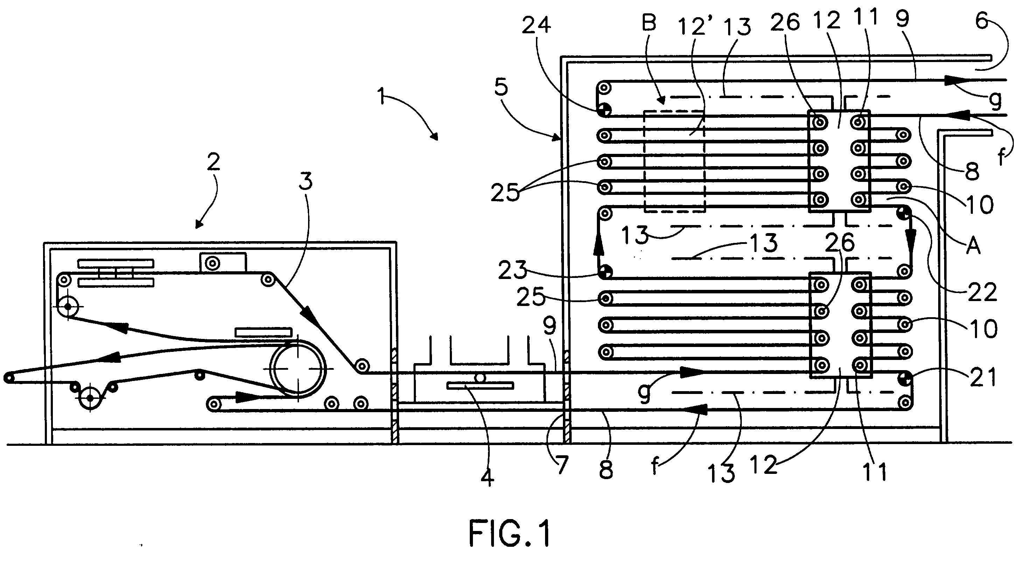

Die in Figur 1 insgesamt mit 1 bezeichnete Eintafelanlage besteht aus einer bekannten Austafelvorrichtung 2, durch welche in bekannter Art und Weise ein Kettenpaar 3 geführt ist, das in üblicher Weise die das Schokoladenerzeugnis enthaltenden Formen 4 fördert.

Der Übersichtlichkeit halber ist nur ein Formblech 4 schematisch dargestellt.

Zwischen einem bekannten (nicht dargestellten) Kühlschrank und der Austafeleinrichtung 2 ist ein nahezu geschlossener Raum 5 vorgesehen. Im oberen Teil der Wand des für die vorübergehende Zwischenlagerung der Formen 4 dienenden Raumes 5 ist eine Eintrittsöffnung 6 vorgesehen, während im unteren Teil der gegenüberliegenden Wand eine Austrittsöffnung 7 für die Formen 4 vorgesehen ist.

Durch die Öffnung 6 tritt das Kettentrumm 8 der für die Zuführung der gefüllten Formen vorgesehenen, parallel verlaufenden Ketten 3 in Pfeilrichtung f in den Raum 5 ein.

Das für den Abtransport der leeren Formen dienende Kettentrumm 9 verlässt den Raum 5 in Pfeilrichtung g.

Ausgehend von der Eintrittsöffnung 6 legt das Trumm 8 des die Formen 4 tragenden Kettenpaares eine mit (A) bezeichnete und von ortsfesten Umlenkrädern 10 sowie durch Umlenkräder 11 festgelegte, mäanderartig verlaufende Strecke zurück. Die Umlenkräder 11 sind an einem Schlitten 12 gelagert, der sich an schematisch durch eine strichpunktierte Linie dargestellte Führung oder Schiene 13 bewegen kann.

Es wird darauf hingewiesen, dass in Figur 1 bis 3 nur ein Kettenstrang (B) mit dem zugeordneten, beweglichen Schlitten 12 dargestellt ist, wobei es jedoch für den Fachmann auf diesem Gebiet geläufig ist, dass die Ketten 3 immer paarweise, d.h. parallel zueinander angeordnet sind, damit die Formen 4 in üblicher Weise zwischen zwei Ketten aufgenommen werden können. Die Kettenpaare 8 sowie die Vorrichtungen zur pendelnden Aufhängung der Formen gehören seit langem zum einschlägigen Stand der Technik.

Im unteren Teil der zur Austafeleinrichtung 2 hin gekehrten Wand des Raumes 5 ist eine Öffnung 7 vorgesehen, durch welche das Trumm 8 des Kettenpaares 3 mit den entsprechenden Formen in Pfeilrichtung (f) austritt, während sich in Pfeilrichtung (g) ein Trumm 9 der Kette 3 bewegt und die leeren Formen zur Innenseite des Raumes 5 führt.

Das Trumm 9 verläuft mäanderartig vom Austritt 7 bis zum Eintritt 6 und dieser mäanderartig verlaufende Bereich ist durch eine Gruppe von ortsfest, im Inneren des Raumes 5, angeordneten Umlenkrädern 25 sowie durch eine weitere Gruppe von Umlenkrädern 26 begrenzt, die vom entsprechenden, verschiebbar angeordneten Schlitten 12 getragen werden.

Am unteren Ende des Schlittens 12 sind mit den ortsfest vorgesehenen Umlenkrädern 10 fluchtende, steuerbare Motoren 21 bzw. 22 angeordnet. Die Motoren sind in vorteilhafter Weise als Stellmotoren ausgebildet, die sowohl hinsichtlich ihrer Drehzahl als auch hinsichtlich ihres Drehmomentes regelbar und genau steuerbar sind.

Es sind des weiteren mit 23 und 24 bezeichnete Stellmotoren vorgesehen, die mit den ortsfesten, den Rädern 10 gegenüberliegenden Umlenkrädern 25 sowie mit dem oberen Ende des verschiebbaren Schlittens 12 fluchten. Auch diese Motoren sind als Stellmotoren ausgebildet, die sowohl hinsichtlich der Drehzahl als auch hinsichtlich des Drehmoments geregelt und genau steuerbar sind, und zwar unter Verwendung von elektronischen Steuermitteln, zum Beispiel bekannten NC-Einrichtungen, die ferner die Aufgabe haben, die Bewegung der dem Hauptmotor zugeordneten Kette (nicht dargestellt) zu unterstützen.

Es ist ferner möglich, für jede einzelne Verpackungsmaschine in einfacher Weise ein Störungssignal zu erzeugen, das einer bekannten NC-Steuereinheit übermittelt wird, die wiederum Steuersignale für die Motoren 21 und 22 erzeugt.

Arbeiten zum Beispiel alle drei Verpackungsmaschinen ungestört, so laufen sämtliche Motoren 21, 23 bzw. 22, 24 mit gleicher Drehzahl und synchron mit dem Hauptmotor für den Antrieb der Ketten.

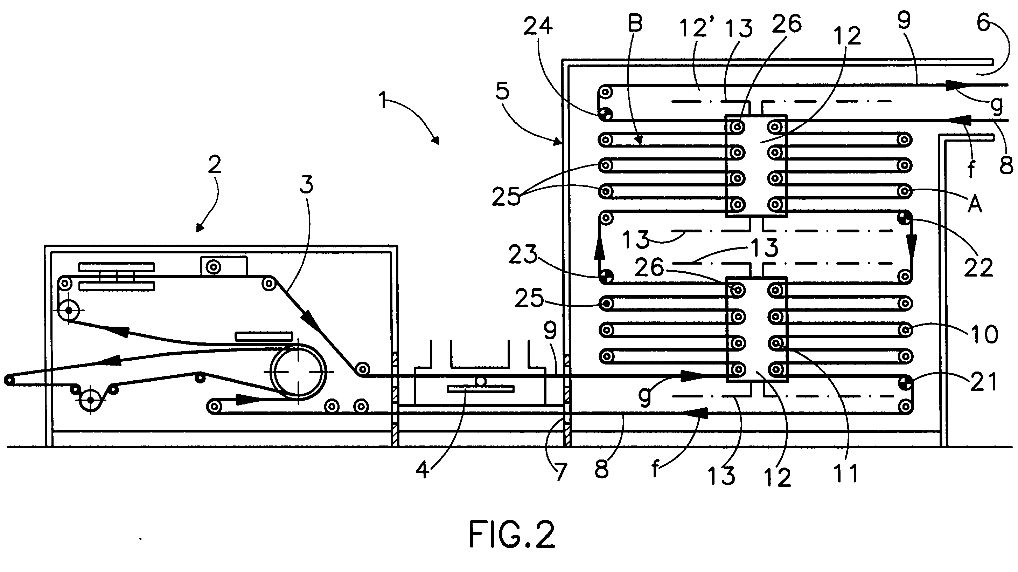

In Figur 2 ist ein Betriebszustand dargestellt, bet welchem zum Beispiel eine Verpackungsmaschine ausgefallen ist.

In diesem Fall läuft sowohl der Motor 22 als auch der Motor 21 mit einer niedrigeren Drehzahl und, da die Motoren 24 und 23 mit einer höheren Drehzahl laufen, wird jeder Schlitten 12 schrittweise zur Mitte des Raumes 5 hin verschoben.

In diesem Zustand wird die Strecke (A) langsam verlängert, so dass sich die angelieferten Formen 4 ansammeln, da sie in der Ausformeinrichtung 2 mit einem Takt überführt werden, der niedriger als die Arbeitsgeschwindigkeit der Ausformeinrichtung ist.

In Figur 1 ist der zur vorübergehenden Lagerung dienende Raum 5 mit dem Schlitten 12 dargestellt, der sich in einer Position befindet, die einem normalen, ungestörten Betrieb der Verpackungsmaschinen (nicht dargestellt) ohne anzusammelnde Schokoladenerzeugnisse entspricht.

Bei diesem normalen Betriebszustand nehmen die Verpackungsmaschinen die aufgrund der Soll-Leistung der Eintafelanlage hergestellten Schokoladentafeln vollständig auf, und es ist daher nicht erforderlich, den zur vorübergehenden Lagerung dienenden Raum mit gefüllten Formen zu beschicken. Die gefüllten Formen werden entlang einer mit (A) bezeichneten und in Figur 1 dargestellten Förderstrecke fast unmittelbar zur Austafeleinrichtung 2 befördert. Mit anderen Worten: in dem beschriebenen Fall ist die Förderstrecke (A) so kurz wie möglich gehalten und die mit Schokolandenerzeugnissen gefüllten Formen gelangen in kürzester Zeit zur Austafeleinrichtung 2.

In diesem ordnungsgemässen Betriebszustand der ganzen Anlage werden die Motoren 21 und 23 so betätigt und gesteuert, dass beide Motoren mit gleicher Drehzahl laufen.

Lässt dagegen, aus irgendeinem nicht von der Eintafelanlage, sondern von einer Störung in einer der Verpackungsmaschinen, die Verpackungsleistung dieser Maschinen plötzlich nach, so dass die Verarbeitung der zu verpackenden Erzeugnisse herabgesetzt werden muss, so wird der Motor 21 angetrieben und so gesteuert, dass seine Drehzahl herabgesetzt wird, während der Motor 23 mit unveränderter Solldrehzahl, d.h. mit der vorher beschriebenen Solldrehzahl, weiterläuft.

Dadurch werden aufgrund des Drehzahlunterschiedes zwischen den Motoren 21 und 23 auf die Kettenpaare 9, die den Bereich (B) bilden, grössere Zugkräfte ausgeübt. Da diese Kräfte zwischen dem Bereich (A) und dem Bereich (B) nicht mehr ausgeglichen sind, hat der Schlitten 12 die Tendenz, sich auf die linke Wand zu bewegen, in der die Öffnung 7 vorgesehen ist. Folglich wird der Bereich (B), in dem sich die leeren Formen ansammeln, (in Bezug auf die Länge der über die Umlenkräder 25 und 26 geführten Ketten) verkürzt, während der Bereich (A) zwischen den Umlenkrädern 10 und den von dem beweglichen Schlitten 12 getragenen Umlenkrädern 11 länger wird, d.h., die vom Kettentrumm (A) zurückzulegende Strecke nimmt zu, und daher wächst auch die Zeit, die jede Form braucht, um vom Eintritt 6 zur Öffnung 7 zu gelangen.

Die Drehzahl des Motors 21 kann in gesteuerter Weise weiter abnehmen, so dass die Strecke (A) der Kette 8 ihre maximale Länge erreicht, während die Strecke (B) der Kette, die für den Rücklauf der leeren Formen vorgesehen ist, minimale Länge einnimmt.

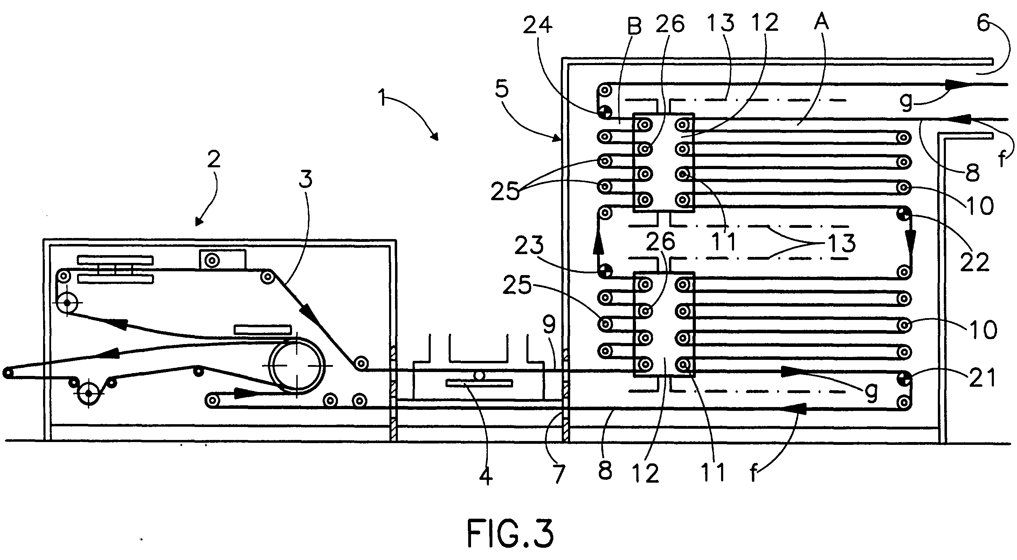

Dieser Zustand ist in Figur 3 dargestellt.

Dabei nimmt die Strecke (A) des Kettentrumms 8 maximale Länge ein, wodurch die Verweilzeit der gefüllten Formen 4 ein zeitliches Maximum erreicht und dadurch während der Schlittenbewegung (pro Zeiteinheit) nur wenige gefüllte Formen der Austafeleinrichtung 2 zugeführt werden, da die vollen Formen 4 im Inneren des Raumes 5 umlaufen.

Im Extremfall kann der Motor 21 ganz abgestellt werden, wodurch die Überführung der Formen in den Austafelbereich unterbrochen wird. In diesem Falle sammeln sich die Formen 4 im Einlagerungsbereich 5 bis zum Höchstmass seines Fassungsvermogens an. Das maximale Fassungsvermögen wird in dem Augenblick erreicht, in dem der Schlitten zu der, der die Umlenkräder 10 tragenden Wand entgegengesetzten Wand gelangt.

Selbstverständlich kann die Änderung der Drehzahl des Motors 21 ausschliesslich innerhalb der gesetzten Grenzen hinsichtlich des Fassungsvermögens (Abmessungen) des Raumes 5 erfolgen.

Den Zeichnungen ist zu entnehmen, dass in vorteilhafter Weise ein oberer Schlitten 12 vorgesehen ist, der von einem unteren Schlitten 12 getrennt angeordnet ist, so dass ein oberer Zuführbereich (A) sowie ein unterer Bereich (A) für die Zufuhr der gefüllten Formen und demzufolge ein oberer Bereich (B) und ein unterer Bereich (B) für den Abtransport der leeren Formen gebildet werden.

Der Einsatz eines zweigeteilten oder mehrteiligen verfahrbaren Schlittens 12 bietet den Vorteil, dass sich Teilbereiche (A) für die Zufuhr und Teilbereiche (B) für den Rücklauf der leeren Formen, je nach der notwendigen vorübergehenden Lagerung der Formen bilden lassen.

So ist es zum Beispiel möglich, einen oberen Schlitten 12' in die in Figur 1 gestrichelt dargestellte Lage zu bewegen, während der untere Schlitten 12 in der dargestellten Lage verbleiben kann.

Aufgrund dieser Massnahme wird praktisch ausschliesslich der obere Bereich des Raumes 5 als Bereich für die vorübergehende Lagerung der Formen genutzt, während der untere Bereich ungenutzt bleibt, was einen relativ raschen Durchlauf der mit Schokolade gefüllten Formen erlaubt.

Ist es erwünscht, nur den oberen Bereich des Raumes 5 für die vorübergehende Einlagerung der mit Schokolade gefüllten Formen zu nutzen, so ist es erforderlich, auch die Motoren 22 und 24 mit unterschiedlichen Drehzahlen anzutreiben, und zwar in der Art und Weise, wie dies bereits für die Motoren 21, 22 beschrieben wurde.

Sobald die Verpackungsmaschinen wieder voll leistungsfähig sind und daher erneut in der Lage sind, die gesamte Produktion der Eintafelanlage zu verpacken, wird der Motor 21 auf seine normale Drehzahl zurückgefahren und der oder die Schlitten 12 werden in eine Position verschoben, die sich zwischen den in Figur 1 bis 3 dargestellten Lagen befindet.

In diesem Fall tritt für jede in den Lagerraum 5 einlaufende Form eine gefüllte Form 4 aus dem Raum, um zur Austafeleinrichtung 2 zu gelangen.

Arbeiten die Verpackungsmaschinen mit voller Leistung und sind daher in der Lage, wenigstens 120% der Gesamtproduktion der Eintafelanlage zu verarbeiten, so lässt man den Motor 21 mit einer im Verhältnis zur Drehzahl des Motors 23 höheren Drehzahl laufen. In diesem Fall tritt eine zu der vorher beschriebenen Situation entgegengesetzte Wirkung ein, die dazu führt, dass dem Austafelbereich eine Anzahl an Formen zugeführt wird, die grösser ist als die Anzahl der aus der vorgeschalteten und nicht dargestellten Eintafeleinrichtung im Bereich 5 ankommenden Formen. Dabei bewegen sich die Schlitten stufenweise in, gegenüber der vorangegangenen Beschreibung entgegengesetzen Richtung und damit wird die Strecke der Ketten 8 im Einlagerungsbereich verkürzt. Aus dem Raum 5 werden daher allmählich während der Schlittenbewegung die angesammelten, vollen Formen ausgefahren, bis der in Figur 1 dargestellte Zustand der kleinsten Ansammlung an Formen erreicht wird.

Durch die Anordnung des oder der beweglichen Schlitten 12 und durch die Vorsehung der steuerbaren Motoren 21, 22, 23, 24 ist es möglich, eine gleichbleibende Geschwindigkeit der Kettenpaare 8 beizubehalten, was die Betriebsbedingungen der verbleibenden Teile der Eintafelanlage in vorteilhafter Weise beeinflusst.

## Patentansprüche

1. Verfahren zur vorübergehenden Lagerung der aus einer Schokoladeneintafelanlage kommenden Formen, **dadurch gekennzeichnet**, dass die das Schokoladenerzeugnis enthaltenden Formen einem Raum zugeführt werden, durch den sich die Formen entlang mäanderartig verlaufenden Bahnen bewegen und dass die Länge der sich mäanderartig erstreckenden Bahnen je nach der Anzahl der vorübergehend einzulagernden Formen veränderbar ist.

2. Anordnung zur vorübergehenden Lagerung der aus einer Schokoladeneintafelanlage kommenden Formen, zur Durchführung des Verfahrens nach Anspruch 1, **dadurch gekennzeichnet**, dass ein im wesentlichen geschlossener Raum (5) vorgesehen ist, der Eintritts- sowie Austrittsöffnungen (6, 7) für Förderkettenpaare (8) aufweist, dass zwischen den Ketten (8) die mit Schokolade oder einer ähnlichen Ware gefüllten Formen (4) in üblicher Weise getragen werden, dass die Kettenpaare (8) mit den Formen (4) den Raum (5) mäanderartig durchlaufen, dass im Bereich der, die Eintrittsöffnung (6) des Kettenpaares (8) aufweisenden Begrenzungswand, übereinanderangeordnete Umlenkräder (10) in ortsfester Lage angeordnet sind und auch im Bereich der entgegengesetzten, den Raum (5) begrenzenden und eine Austrittsöffnung für das Kettenpaar (8) aufweisenden Wand übereinanderangeordnete Umlenkräder (25) in ortsfester Lage angeordnet sind, wobei zwischen den Gruppen von in ortsfester Lage angeordneten Umlenkrädern (10, 25) wenigstens ein in waagerechten Führungen (13) frei verfahrbarer Schlitten (12) angeordnet ist, dass der bewegliche Schlitten (12) eine Gruppe von Umlenkrädern (11), über die das eintretende Kettentrumm (8) geführt ist sowie eine Gruppe von Umlenkrädern (26), über die die austretenden Kettentrumme (9) geführt sind, trägt und im Bereich der ortsfesten, für das aus dem beweglichen Schlitten (12) austretende Kettentrumm (8) vorgesehenen Umlenkräder (10) ein steuerbarer Kettenantriebsmotor (22, 21) in ortsfester Lage vorgesehen ist und dass im Bereich der ortsfesten, für das zum beweglichen Schlitten (12) zurückkehrende Kettentrumm (9) vorgesehenen Umlenkräder (25) ein weiterer steuerbarer Kettenantriebmotor (23, 24) in ortsfester Lage vorgesehen ist.

3. Anordnung zur vorübergehenden Lagerung von Formen nach Anspruch 2, **dadurch gekennzeichnet**, dass der die Umlenkräder (11, 26) aufnehmende Schlitten (12) in Teilschlitten aufgeteilt ist und dass jedem beweglichen Schlitten ein steuerbarer Stellmotor (21, 23 bzw. 22, 24) zugeordnet ist.
